(19) Europäisches Patentamt
European Patent Office
Office européen des brevets

(11) Veröffentlichungsnummer: **0 373 465 B1**

(12) **EUROPÄISCHE PATENTSCHRIFT**

(45) Veröffentlichungstag der Patentschrift: **25.01.95**

(51) Int. Cl.$^6$: **C08K 5/524**, C08K 5/527, C08L 67/02, C08L 69/00

(21) Anmeldenummer: **89122286.1**

(22) Anmeldetag: **02.12.89**

(54) **Stabilisierte thermoplastische Formmassen.**

(30) Priorität: **15.12.88 DE 3842219**

(43) Veröffentlichungstag der Anmeldung:
**20.06.90 Patentblatt 90/25**

(45) Bekanntmachung des Hinweises auf die Patenterteilung:
**25.01.95 Patentblatt 95/04**

(84) Benannte Vertragsstaaten:
**DE ES FR GB IT NL**

(56) Entgegenhaltungen:
**EP-A- 0 292 786**
**DE-A- 2 615 341**
**FR-A- 2 206 327**
**US-A- 4 522 979**

(73) Patentinhaber: **BAYER AG**

**D-51368 Leverkusen (DE)**

(72) Erfinder: **Idel, Karsten-Josef, Dr.**
**Am Schwarzkamp 38**
**D-4150 Krefeld (DE)**
Erfinder: **Kirsch, Jürgen, Dr.**
**Hahnenweg 1**
**D-5000 Köln 80 (DE)**
Erfinder: **Friedemann, Paul, Dipl.-Ing.**
**Peter-Walterscheid-Strasse 65**
**D-5060 Bergisch Gladbach (DE)**
Erfinder: **Meier, Lothar, Dr.**
**Buchenstrasse 31b**
**D-4322 Sprockhövel 2 (DE)**
Erfinder: **Gehrke, Hans-Georg, Dipl.-Ing.**
**Schlehdornweg 29**
**D-5068 Odenthal (DE)**

**EP 0 373 465 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen auf der Basis von Polyalkylenterephthalat, aromatischem Polycarbonat und gegebenenfalls kautschukelastischem Polymerisat, die mit speziellen Stabilisatoren versehen sind, sowie aus den thermoplastischen Formmassen hergestellte Formkörper.

Mischungen aus Polyalkylenterephthalat und aromatischem Polycarbonat bzw. Mischungen aus Polyalkylenterephthalat, aromatischem Polycarbonat und kautschukelastischem Polymerisat sind grundsätzlich bekannt (DE 23 48 377, DE 23 43 609 sowie EP-A-105 388). Diese bekannten Mischungen weisen viele positive Eigenschaften auf, werden jedoch manchen speziellen Anforderungen nicht gerecht. So werden beispielsweise die Anforderungen an die Lackierbarkeit zur Erzielung einer guten Oberfläche und guter Lackhaftung bei gegebenen Lacksystemen oft nicht erfüllt. Außerdem wird das ursprünglich erreichte gute Zähigkeits- und Wärmeformbeständigkeitsniveau bei erhöhten Verarbeitungstemperaturen oder längeren Verweilzeiten bei der thermoplastischen Verarbeitung zum Formteil reduziert. Eine Verringerung des Zähigkeits- und Wärmeformbeständigkeitsniveaus tritt häufig auch nach der Lackierung des Formteils ein.

Aufgabe vorliegender Erfindung war es daher thermoplastische Formmassen zur Verfügung zu stellen, die eine gute Zähigkeit sowie Wärmeformbeständigkeit aufweisen und vor allen Dingen eine bessere Lackierbarkeit verbunden mit einer guten Lackhaftung ermöglichen.

Überraschenderweise wurde nun gefunden, daß durch den Zusatz einer Kombination von speziellen Phosphorverbindungen Formmassen erhalten werden, bei denen die Lackierbarkeit und die Lackhaftung deutlich verbessert sind. Zudem weisen die lackierten und unlackierten Formteile eine wesentlich günstigere Tieftemperaturzähigkeit und Wärmeformbeständigkeit auf.

Gegenstand der vorliegenden Erfindung sind somit thermoplastische Formmassen auf Basis von

A. 10 bis 99, vorzugsweise 20 bis 80, insbesondere 30 bis 70 Gew.-Teilen Polyalkylenterephthalat,

B. 5 bis 80, vorzugsweise 10 bis 60 Gew.-Teilen aromatischem Polycarbonat,

C. gegebenenfalls 1 bis 30, vorzugsweise 1 bis 28 Gew.-Teilen kautschukelastischem Polymerisat.

sowie

D. 0,01 bis 0,5 Gew.Teilen einer Phosphitverbindung der Formel (I)

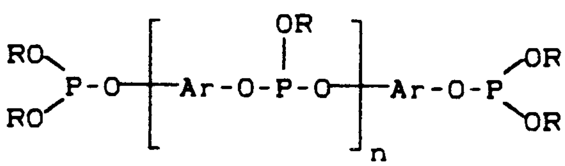

(I),

worin

R für $C_1$-$C_{18}$-Alkyl, $C_6$-$C_{15}$-Aryl, $C_5$-$C_6$-Cycloalkyl, $C_7$-$C_9$-Aralkyl oder für einen mindestens eine Oxetanylgruppe enthaltenden $C_1$-$C_{18}$-Monoalkoholrest steht, mit der Maßgabe, daß mindestens einer der Reste R für einen Oxetanylgruppen enthaltenden $C_1$-$C_{18}$-Monoalkaholrest steht,

Ar einem Rest der Formel (II)

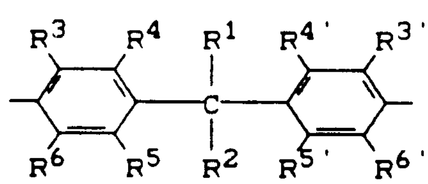

(II),

entspricht, worin

$R^1$, $R^2$ gleich oder verschieden sind und Wasserstoff, $C_1$-$C_{18}$-Alkyl oder ein- oder mehrkerniges $C_6$-$C_{18}$-Aryl bedeuten und

$R^3$, $R^{3'}$, $R^4$, $R^{4'}$, $R^5$, $R^{5'}$, $R^6$ und $R^{6'}$ gleich oder verschieden sind und Wasserstoff, $C_1$-$C_{18}$-Alkyl, $C_3$-$C_6$-Cycloalkyl, ein- oder mehrkerniges $C_6$-$C_{18}$-Aryl, $C_1$-$C_{18}$-Alkoxy, $C_1$-$C_{18}$-Aryloxy oder Halogen bedeuten,

und worin

n eine ganze Zahl von 0 bis 10, vorzugsweise von 0 bis 2 ist,

E. 0,01 bis 0,5 Gew.-Teilen eines Phosphorigsäureesters der Formel (III)

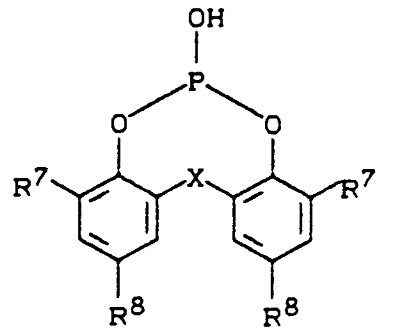

(III),

worin

$R^7$ und $R^8$ gleich oder verschieden sind und für $C_1$-$C_9$-Alkyl, $C_5$-$C_6$-Cycloalkyl, $C_7$-$C_9$-Aralkyl oder $C_6$-$C_{10}$-Aryl stehen und

X für -S- oder $R^9$-CH mit $R^9$ für Wasserstoff, $C_1$-$C_6$-Alkyl oder $C_5$-$C_6$-Cyclohexyl steht, und

F. gegebenenfalls 0,1 bis 1 Gew.-Teilen Nukleierungsmitteln, Pigmenten und/oder Entformungsmitteln.

Als Alkylreste der Formeln (I), (II) und (III) kommen beispielsweise in Frage: Methyl, Ethyl, Propyl, Isononyl,

als Aralkylreste:

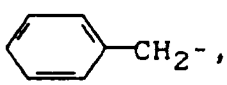

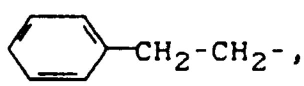

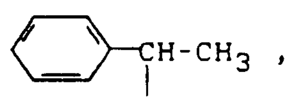

als Cycloalkylreste: Cyclopentyl, Cyclohexyl,

als Arylreste: Phenyl, Naphthyl,

als Alkoxyreste: Methoxy, Ethoxy, Propoxy, Butoxy,

als Aryloxyreste: Phenoxy, Naphthoxy,

und als Halogene: Fluor, Chlor, Brom, bevorzugt Fluor und Chlor.

Besonders bevorzugt sind Phosphitverbindungen (D) der Formel (I), in der n = 0 bedeutet, Ar für

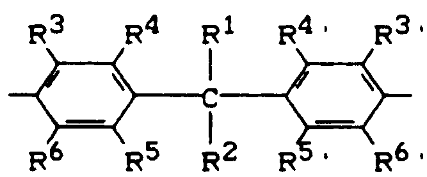

steht mit $R^1$ und $R^2$ für $CH_3$ und $R^3$, $R^{3'}$, $R^4$, $R^{4'}$, $R^5$, $R^{5'}$, $R^6$ und $R^{6'}$ für Wasserstoff [Phosphorigsäure-(1-methyl ethylen)-di-4,1-phenylen-tetrakis-(3-ethyl-(3-oxethanyl)-methyl)-ester].

Bevorzugt werden als Komponente (E) Phosphorigsäureester der Formel (III) eingesetzt, in der $R^7$ und $R^8$ für einen Benzyl-, α-Methylbenzyl-, α,α-Dimethylbenzyl-, Methyl-, Ethyl-, Isopropyl-, tert.-Butyl-, tert.-Amyl-, Isononyl-, Cyclopentyl- oder Cyclohexyl-Rest stehen und X für

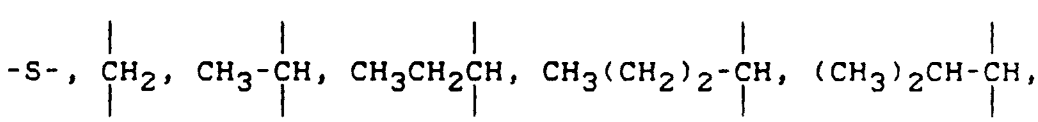

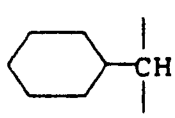

oder

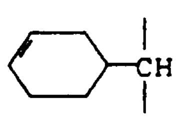

steht.

Besonders bevorzugt ist der Phosphorigsäureester der Formel (III), worin X für Methylen, $R^7$ für Cyclohexyl und $R^8$ für Methyl stehen [4,8-Dicyclohexyl-6-hydroxy-2,10-dimethyl-12H-dibenzo(d,g)(1,3,2)-dioxaphosphocin].

Die Phosphitverbindungen der Formel (I) können in bekannter Weise durch Umesterung von entsprechenden Phosphiten mit Diphenolen (die sich von Formel (II) ableiten) hergestellt werden (vgl. DE 25 10 463)

Die Phosphorigsäureester der Formel (III) können in bekannter Weise hergestellt werden durch Umsetzung von Triphenylphosphit mit entsprechenden Dihydroxyverbindungen in Gegenwart von Wasser (vgl. z.B. DE 29 29 229).

Polyalkylenterephthalate A im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate A lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser-Verlag, München 1973).

Bevorzugte Polyalkylenterephthalate A enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate A können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate A können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan und 2,2-Bis-(4-hydroxypropoxyphenyl)-propan (DE-OS 24 07 674, 24 07 776, 27 15 932).

Die Polyalkylenterephthalate A können durch Einbau relativ kleiner Mengen 3- oder 4-wertiger Alkohole oder 3- oder 4-basischer Carbonsäuren, wie sie z.B in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate A, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalate A sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente A vorzugsweise verwendeten Polyalkylenterephthalate besitzen im allgemeinen eine Intrinsic-Viskosität von ca. 0,4 bis 1,5 dl/g, vorzugsweise 0,5 bis 1,3 dl/g jeweils gemessen in Phenol/o-Dichlorbenzol (1:1 Gew.-Teile) bei 25 °C.

Unter aromatischen Polycarbonaten B im Sinne dieser Erfindung werden Homopolycarbonate, Copolycarbonate und Mischungen dieser Polycarbonate verstanden, denen z.B. mindestens eines der folgenden Diphenole zugrunde liegt:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,

Bis-(hydroxyphenyl)-sulfone,
$\alpha,\alpha'$-Bis-(hydroxyphenyl)-diisopropylbenzole,
sowie deren kernalkylierte und kernhalogenierte Derivate. Diese und weitere geeignete Diphenole sind z.B. in den US-PS 3 028 365, 2 275 601, 3 148 172, 3 062 781, 2 991 283, 3 271 367, 2 999 835, 2 970 131 und 2 999 846, in den DE-OS 1 570 703, 2 063 050, 2 063 052, 2 211 956, 2 211 957, der FR-PS 1 561 518 und in der Monographie von H. Schnell, "Chemistry and Physics of Polycarbonates", Interscience Publishers, New York, 1964, beschrieben.

Bevorzugte Diphenole sind z.B.
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan und
Bis-(4-hydroxyphenyl)-sulfid.

Besonders bevorzugte aromatische Polycarbonate sind Polycarbonate auf Basis von 2,2-Bis-(4-hydroxyphenyl)-propan bzw. einem der anderen als bevorzugt genannten Diphenole. Ganz besonders bevorzugt sind solche auf Basis von 2,2-Bis-(4-hydroxyphenyl)-propan oder 2,2-Bis-(3,5-dimethyl-4-hydroxyphenyl)-propan.

Die aromatischen Polycarbonate können nach bekannten Verfahren hergestellt werden, z.B. durch Schmelzumesterung eines entsprechenden Bisphenols mit Diphenylcarbonat und in Lösung aus Bisphenolen und Phosgen. Die Lösung kann homogen sein (Pyridinverfahren) oder heterogen (Zweiphasengrenzflächenverfahren) (vgl. z.B. H. Schnell, "Chemistry and Physics of Polycarbonates", Polymer Reviews, Vol. IX, S. 33ff, Interscience Publ. 1964).

Die aromatischen Polycarbonate besitzen in der Regel mittlere Molekulargewichte $\overline{M}_w$ von ca. 10 000 bis 200 000, vorzugsweise 20 000 bis 80 000 (ermittelt durch Gelchromatographie nach vorheriger Eichung).

Copolycarbonate im Sinne der Erfindung sind insbesondere Polydiorganosiloxan-Polycarbonat-Blockcopolymere mit mittlerem Molekulargewicht $\overline{M}_w$ von ca. 10 000 bis 200 000, vorzugsweise 20 000 bis 80 000 (ermittelt durch Gelchromatographie nach vorheriger Eichung) und mit einem Gehalt an aromatischen Carbonatstruktureinheiten von etwa 75 bis 97,5 Gew.-%, bevorzugt 85 bis 97 Gew.-% und einem Gehalt an Polydiorganosiloxanstruktureinheiten von etwa 25 bis 2,5 Gew.-%, bevorzugt 15 bis 3 Gew.-%, wobei die Blockcopolymeren ausgehend von $\alpha,\omega$-Bishydroxyaryloxyendgruppen-haltigen Polydiorganosiloxanen mit einem Polymerisationsgrad $\overline{P}_n$ von 5 bis 100, bevorzugt 20 bis 80, hergestellt werden.

Die Polydiorganosiloxan-Polycarbonat-Blockcopolymeren können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung ca. 2,5 bis 25 Gew.-% beträgt.

Solche Polydiorganosiloxan-Polycarbonat-Blockcopolymere sind dadurch gekennzeichnet, daß sie in der Polymerkette einerseits aromatische Carbonatstruktureinheiten (1) und andererseits Aryloxyendgruppen-haltige Polydiorganosiloxane (2) enthalten,

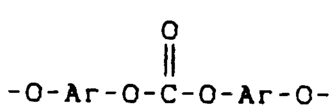
(1),

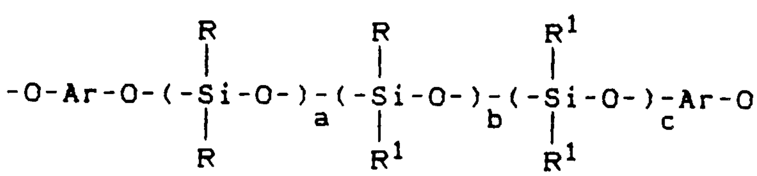
(2),

worin

| | |
|---|---|
| Ar | gleiche oder verschiedene Arylenreste aus Diphenolen sind und |
| R und $R^1$ | gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten, |

und a, b und c ganze Zahlen von Null bis 100 darstellen und
die Anzahl der Diorganosiloxy-Einheiten n = a + b + c = 5 bis 100, vorzugsweise 20 bis 80, ist.

Alkyl ist in vorstehender Formel (2) beispielsweise $C_1$-$C_{20}$-Alkyl, Alkenyl ist in vorstehender Formel (1) beispielsweise $C_2$-$C_6$-Alkenyl; Aryl ist in vorstehender Formel (1) $C_6$-$C_{14}$-Aryl. Halogeniert bedeutet in vorstehender Formel teilweise oder vollständig chloriert, bromiert oder fluoriert Beispiele für Alkyle, Alkenyle, Aryle, halogenierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere sind z.B. aus US-PS 3 189 662, US-PS 3 821 325 und US-PS 3 832 419 bekannt.

Bevorzugte Polydiorganosiloxan-Polycarbonat-Blockcopolymere werden hergestellt, indem man $\alpha,\omega$-Bishydroxyaryloxyendgruppen-haltige Polydiorganosiloxane zusammen mit anderen Diphenolen, gegebenenfalls unter Mitverwendung von Kettenabbrechern in den üblichen Mengen und gegebenenfalls unter Mitverwendung van Verzweigern in den üblichen Mengen, z.B. nach dem Zweiphasengrenzflächenverfahren (s. dazu H. Schnell, Chemistry and Physics of Polycarbonates, Polymer Rev., Vol. IX, Seite 27 ff., Interscience Publishers New York, 1964) umsetzt, wobei jeweils das Verhältnis der bifunktionellen phenolischen Reaktanten so gewählt wird, daß daraus der erfindungsgemäße Gehalt an aromatischen Carbonatstruktureinheiten und Diorganosiloxy-Einheiten resultiert.

Derartige $\alpha,\omega$-Bishydroxyaryloxyendgruppen-haltige Polydiorganosiloxane sind z.B. aus US 3 419 634 bekannt.

Die kautschukelastischen Polymerisate C umfassen Copolymerisate - insbesondere Pfropfcopolymerisate - mit kautschukelastischen Eigenschaften, die im wesentlichen aus mindestens 2 der folgenden Monomeren erhältlich sind: Chloropren, Isopren, Isobuten, Styrol, Acrylnitril, Ethylen, Propylen, Vinylacetat und (Meth)Acrylsäureester mit 1 bis 18 C-Atomen in der Alkoholkomponente; also Polymerisate, wie sie z.B. in "Methoden der organischen Chemie", (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Die Polymerisate C besitzen einen Gelgehalt von über 20, vorzugsweise über 40 Gew.-%.

Bevorzugte Polymerisate C sind selektiv hydrierte Blockcopolymerisate eines vinylaromatischen Monomeren (X) und eines konjugierten Diens (Y) von X-Y-Typ. Diese Blockcopolymerisate können nach bekannten Verfahren hergestellt werden.

Im allgemeinen kann für die Herstellung der geeigneten X-Y-Blockcopolymerisate aus Styrol, $\alpha$-Methylstyrol, Vinyltoluol usw. und aus konjugierten Dienen, wie Butadien, Isopren usw., die für die Herstellung von Styrol-Dien-Blockcopolymerisaten verwendete Technologie benutzt werden, die in "Encyclopedia of Polymer Science and Technology", Bd. 15, Interscience, N.Y. (1971) auf den Seiten 508 ff beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben.

Derartige selektiv hydrierte Blockcopolymerisate werden z.B. in der DE-OS 30 00 282 beschrieben.

Bevorzugte Polymerisate C sind z.B. mit Styrol und/oder Acrylnitril und/oder (Meth)-Acrylsäurealkylestern gepfropfte Polybutadiene, Butadien/Styrol-Copolymerisate und Poly(meth)-acrylsäureester, z.B. Copolymerisate aus Styrol oder Alkylstyrol und konjugierten Dienen (schlagfestes Polystyrol), d.h. Copolymerisate der in der DE-OS 16 94 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 23 48 377 (= US-PS 3 919 353) bzw. in der DE-A-3 105 364 und DE-A-3 019 233 beschrieben sind.

Besonders bevorzugte Polymerisate C sind z.B. ABS-Polymerisate (sowohl Misch- als auch Pfropftypen), wie sie z.B. in der DE-OS 20 35 390 (= US-PS 3 644 574) oder in der DE-OS 22 48 242 (= GB-PS 1 409 275) beschrieben sind.

Darüber hinaus sind besonders bevorzugte Polymerisate C Pfropfpolymerisate, die durch Pfropfreaktion von

I. 10 bis 40, vorzugsweise 10 bis 35, Gew.-%, bezogen auf Pfropfprodukt, mindestens eines (Meth)-Acrylsäureesters und/oder eines Gemisches aus
10 bis 40, vorzugsweise 20 bis 35, Gew.-%, bezogen auf Gemisch, Acrylnitril und
60 bis 90, vorzugsweise 65 bis 80, Gew.-%, bezogen auf Gemischt, Styrol auf

II. 60 bis 90, vorzugsweise 65 bis 90, Gew.-%, bezogen auf Pfropfprodukt, eines Butadien-Polymerisats mit mindestens 70 Gew.-%, bezogen auf II, Butadienresten als Pfropfgrundlage erhältlich sind,

wobei vorzugsweise der Gelanteil der Pfropfgrundlage II $\geq$70 % (in Toluol gemessen), der Pfropfgrad G 0,15 bis 0,55 und der mittlere Teilchendurchmesser $d_{50}$ des Pfropfpolymerisats C 0,2 bis 0,6, vorzugsweise 0,3

bis 0,5 µm betragen (vgl. z.B. EP 01 31 202).

(Meth)Acrylsäureester I sind Ester der Acrylsäure bzw. Methacrylsäure und einwertiger Alkohole mit 1 bis 8 C-Atomen.

Die Pfropfgrundlage II kann neben Butadienresten bis zu 30 Gew.-%, bezogen auf II, Reste anderer ethylenisch ungeästtigter Monomerer, wie z.B. Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, werden erfindungsgemäß unter Pfropfpolymerisaten auch solche Produkte verstanden, die neben den eigentlichen Pfropfpolymerisaten auch Homo- und Copolymerisate der eingesetzten Pfropfmonomeren I enthalten.

Der Pfropfgrad G bezeichnet das Gew.-Verhältnis von aufgepfropften Pfropfmonomeren zu Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann bestimmt werden mittelts Ultrazentrifugen-Messungen (W. Scholtan, H. Lange, Kolloid. Z. und Z. Polymere 250 (1972), 782-796) oder mittels Elektronenmikroskopie und anschließende Teilchenauszählung (C. Kämpf, H. Schuster, Angew. Makromolekulare Chemie 14, (1970), 111-129) oder mittels Lichtstreuungsmessungen.

Besonders bevorzugte Polymerisate C sind z.B. auch Pfropfpolymerisate aus

a) 25 bis 98 Gew.-%, bezogen auf C, Acrylatkautschuk mit einer Glasübergangstemperatur unter -20 °C als Pfropfgrundlage und

b) 2 bis 75 Gew.-%, bezogen auf C, mindestens eines polymerisierbaren, ethylenisch ungesättigten Monomeren, dessen bzw. deren in Abwesenheit von (a) entstandenen Homo- bzw. Copolymerisate eine Glasübergangstemperatur von 25 ° C hätten, als Pfropfmonomere.

Die Acrylatkautschuke (a) der Polymerisate C sind vorzugsweise Polymerisate aus Acrylsäurealkylestern, gegebenenfalls mit bis zu 40 Gew.-% anderer polymerisierbarer, ethylenisch ungesättigter Monomerer. Sofern die als Pfropfgrundlage (a) eingesetzten Acrylatkautschuke - wie auf Seite 19 beschrieben - ihrerseits bereits Pfropfprodukte mit einem Dienkautschukkern sind, wird zur Berechnung dieser Prozentangabe der Dienkautschukken nicht mitgezählt. Zu den bevorzugten polymerisierbaren Acrylsäureestern gehören $C_1$-$C_8$-Alkylester, beispielsweise Methyl-, Ethyl-, Butyl-, Octyl- und 2-Ethylhexylester; Halogenalkylester, vorzugsweise Halogen-$C_1$-$C_8$-alkylester, wie Chlorethylacrylat, und aromatische Ester wie Benzylacrylat und Phenethylacrylat. Sie können einzeln oder in Mischung eingesetzt werden.

Die Acrylatkautschuke (a) können unvernetzt oder vernetzt, vorzugsweise partiell vernetzt, sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und gesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat und -isocyanurat, Tris-acryloyl-s-triazine, insbesondere Triallylcyanurat; polyfunktionelle Vinylverbindungen wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2, Gew.-%, bezogen auf Pfropfgrundlage (a).

Bei cyclischen vernetzenden Monomeren mit mindestens 3 ethylenisch ungesättigten Gruppen ist es vorteilhaft, die Menge auf <1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$-$C_6$-alkylether. Bevorzugte Acrylatkautschuke als Pfropfgrundlage (a) sind Emulsionspolymerisate, die einen Gelgehalt von ≧60 Gew.-% aufweisen.

Der Gelgehalt der Pfropfgrundlage (a) wird bei 25 °C in Dimethylformamid bestimmt (M. Hoffmann, H. Krömer, R. Kuhn, Polymeranalytik I und II, Georg Thieme-Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80, bevorzugt 10 bis 50 Gew.-%, bezogen auf (a), betragen. Schale und Kern können unabhängig voneinander unvernetzt, teilvernetzt oder hochvernetzt sein.

Ganz besonders bevorzugt sind die zuvor erwähnten Pfropfpolymerisate aus Polybutadien als Pfropfgrundlage und (Meth)Acrylsäureester und Acrylnitril als Pfropfauflage, wobei die Pfropfgrundlage aus 65 bis 90 Gew.-Teilen vernetztem Polybutadien mit einem Gelgehalt von über 70 % (in Toluol) und die Pfropfgrundlage aus einem 5:1 bis 20:1-Gemisch aus Methylmethacrylat und n-Butylacrylat bestehen (z.B. DE 3 105 364, DE 3 019 233).

Die erfindungsgemäßen Formmassen können Nukleierungsmittel wie feinstverteilten Ruß sowie Mikrotalk enthalten. Weiterhin können die Formmassen übliche Additive wie Gleit- und Entformungsmittel, Füll- und Verstärkungsstoffe sowie Farbstoffe und Pigmente enthalten.

Die Nukleierungsmittel und Additive können in Mengen von ca. 0,1 bis 1,0 Gew.-Teilen den erfindungsgemäßen Formmassen zugegeben werden.

Die Herstellung der erfindungsgemäßen Formmassen kann in den üblichen Mischaggregaten wie Walzen, Knetern, Ein- oder Mehrwellenextrudern durch Vermischen der Einzelkomponenten erhalten werden.

Die erfindungsgemäßen Formmassen lassen sich zu Formkörpern verarbeiten, die auch bei längerer Temperaturbelastung einen außerordentlich geringen Verzug aufweisen. Außerdem lassen sich die Formkörper gut lackieren, wobei die Lackhaftung und die erzielte Oberflächenqualität besonders hervorzuheben ist.

## Beispiele

### Eingesetzte Komponenten

A. Es wird ein Polybutylenterephthalat mit der Intrinsic-Viskosität von 1,25 gl/g, gemessen in o-Dichlorbenzol/Phenol (1:1) bei 25 °C, verwendet.

B1) Das eingesetzte Homopolycarbonat basiert auf Bisphenol A mit einer relativen Lösungsviskosität von 1,28, gemessen in $CH_2Cl_2$ bei 25 °C und einer Konzentration von 0,5 g/ml.

B2) Ein Copolycarbonat auf Basis Bisphenol A und 5,0 Gew.-% Polydimethylsiloxan der Blocklänge ($P_n$) 80, mit einer relativen Lösungsviskosität von 1,29, gemessen analog B1), wurde eingesetzt.

C. Ein Emulsionspolymerisat aus 80 Gew.-Teilen vernetztem Polybutadien (Gelgehalt über 70 %, gemessen in Toluol) und 20 Gew-Teilen Pfropfauflage aus 18 Gew.-Teilen Methylmethacrylat und 2 Gew-Teilen n-Butylacrylat, wobei der mittlere Teilchendurchmesser der in Latexform vorliegenden Pfropfgrundlage zwischen 0,3 und 0,4 µm liegt (vgl. Angaben in DE 3 105 364 und DE 3 019 233) wurde eingesetzt.

D. Phosphorigsäure-(1-methethyliden)di-4,1-phenylen-tetrakis(3-ethyl-(3-oxetanyl)methyl)ester CA: (53184-75-1)

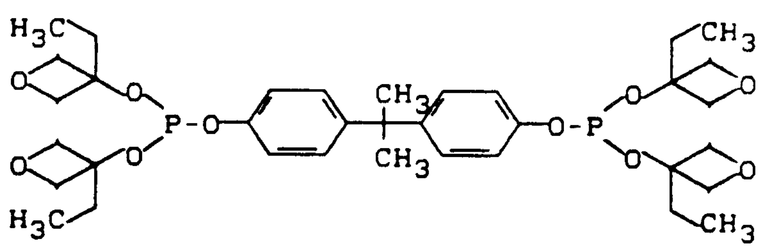

E. 4,8-Dicyclohexyl-6-hydroxy-2,10-dimethyl-12H-dibenzo(d,g)(1,3,2)dioxaphosphocin CA: (73912-21-7)

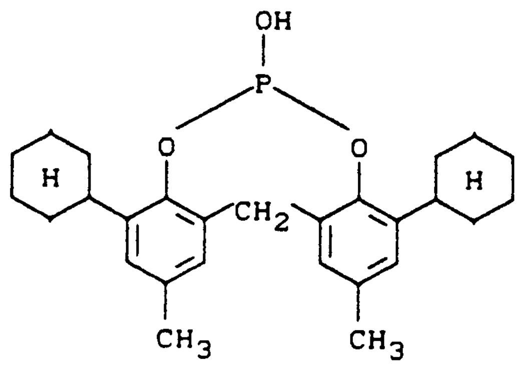

**Tabelle 1:** Zusammensetzung der eingesetzten Formmassen:

| Beispiel | A PBT | B1 PC | B2 Siloxan CoPC | C Kautschuk | D Stabilisatoren (1) | E Stabilisatoren (2) |
|---|---|---|---|---|---|---|
| 1 | 69 | 30 | - | - | - | - |
| 2 | 69 | 30 | - | - | 0,20 | - |
| 3 | 69 | 30 | - | - | - | 0,20 |
| 4 | 69 | 30 | - | - | 0,10 | 0,10 |
| 5 | 69 | - | 30 | - | - | - |
| 6 | 69 | - | 30 | - | 0,20 | - |
| 7 | 69 | - | 30 | - | | 0,20 |
| 8 | 69 | - | 30 | - | 0,10 | 0,10 |
| 9 | 59 | 20 | - | 20 | - | - |
| 10 | 59 | 20 | - | 20 | 0,20 | 0,15 |
| 11 | 59 | - | 20 | 20 | 0,20 | 0,15 |
| 12 | 59 | - | 20 | 20 | - | 0,35 |
| 13 | 59 | - | 20 | 20 | 0,35 | - |
| 14 | 59 | - | 20 | 20 | - | - |

Alle Beispiele enthalten übliche Nukleierungsmittel, Pigmente sowie Entformungsmittel, so daß immer 100 Gew.-Teile erreicht werden.

Tabelle 2

| Versuche zu Lackierbarkeit, Lackhaftung und mechanischen Eigenschaften der eingesetzten Formmassen | | | |
|---|---|---|---|
| | Lackierbarkeit[1)] | Lackhaftung[2)] | Durchstoßvers. bei 0 °C (DIN 53 443) Z[4)] / S[4)] |
| 1 | - | - | |
| 2 | - | - | Z / S |
| 3 | - | - | Z / S |
| 4[x] | + | + | Z |
| 5 | - | - | Z |
| 6 | - | - | Z |
| 7 | - | - | Z |
| 8[x] | + | + | Z |

[x] Versuche 4, 8, 10 und 11 sind erfindungsgemäß.

**Tabelle 3: (siehe Tabelle 2)**

| Versuch | Lackierbarkeit[1)] | Lackhaftung[2)] | $a_k$ bei -30°C 260°C[4)] | /280°C[4)] | (ISO 306) 260°C[3)] | /280°C[3)] | Durchstoßversuch an lackierten[1)] Rundscheiben (DIN 53 443) duktil bis °C |
|---|---|---|---|---|---|---|---|
| 9 | - | - | Z | S | 108 | 104 | -20 |
| 10$^x$ | + | + | Z | Z | 115 | 114 | -20/-30 |
| 11$^x$ | + | + | Z | Z | 116 | 115 | -20/-30 |
| 12 | - | - | Z | Z | 109 | 104 | -10 |
| 13 | - | - | Z | Z | 107 | 105 | -20 |
| 14 | - | - | Z | Z | 109 | 105 | -10/-20 |

x Versuche 4, 8, 10 und 11 sind erfindungsgemäß.

Zu 1): Lacktyp

Das verwendete Lacksystem bestand aus einer elastischen Zweikomponenten-Polyurethan-Grundierung und einem Einkomponenten Alkyd-Melaminharz-Decklack (Einbrenntemperatur 130°C, Einbrennzeit 30 min).

Zu 2): Lackhaftung

a) Gitterschnitt

Die Prüfung der Lackhaftung erfolgte im Gitterschnitt entsprechend DIN 53 151. Die in der Tabelle mit + (plus) gekennzeichneten Versuche entsprachen der Wertung 0 dieser Norm, d.h. kein Absplatzen des Lackes im Schnittgitter. Die mit - (minus) bezeichneten Versuche entsprachen der Wertung 2, d.h. bis max. 15 % Lackabplatzungen.

b) Dampfstrahltest

Die Lackschichten wurden außerdem einem Dampfstrahltest unterzogen. Dazu wurde die Lackoberfläche durch zwei sich kreuzende Schnitte unter 30° bis zur Kunststoffoberfläche aufgeritzt. Diese Schnitte wurden mit einem Gerät (Typ Kärcher HDS 80) unter folgenden Bedingungen beaufschlagt:
Wasserdurchsatz: ca. 800 l/h
Eingestellter Druck: 130 bar
Temperatur: 80°C
Düse: Kärcher-Standard-Düse Nr. 2506
Prüfdauer: 2 min
Abstand der Düse zur Lackoberfläche: 10 cm
Bei den mit + (plus) bezeichneten Versuchen traten bei diesem Test keine Lackablösungen auf. Bei den mit - (minus) bezeichneten Versuchen traten Ablösungen des Lackes von der Oberfläche auf.

Zu 3): Prüfkörper

80 mm x 10 mm x 4 mm; das Material wurde bei 260° C bzw. 280° C Massetemperatur thermoplastisch verarbeitet.

Zu 4):

Z = zäh, Zähbruchverhalten
S = spröd, Sprödbruchverhalten
Wie aus den Tabellen 2 und 3 eindeutig hervorgeht, wird eine gute Lackhaftung bzw. Lackierbarkeit unter Erhalt der mechanischen Eigenschaften nur in den Fällen erreicht, in denen eine Kombination der beiden Stabilisatoren 1 und 2 eingesetzt wird.

**Patentansprüche**

**1.** Thermoplastische Formmassen auf Basis von
A. 10 bis 99 Gew.-Teilen Polyalkylenterephthalat,
B. 5 bis 80 Gew.-Teilen aromatlschem Polycarbonat,
C. gegebenenfalls 1 bis 30 Gew.-Teilen kautschukelastischem Polymerisat sowie
D. 0,01 bis 0,5 Gew.Teilen einer Phosphitverbindung der Formel

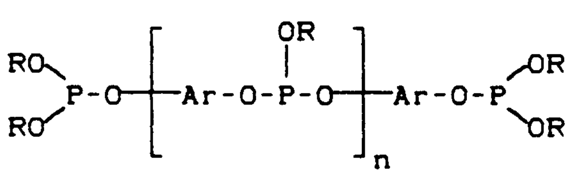
,

worin

R für $C_1$-$C_{18}$-Alkyl, $C_6$-$C_{15}$-Aryl, $C_5$-$C_6$-Cycloalkyl, $C_7$-$C_9$-Aralkyl oder für einen mindestens eine Oxetanylgruppe enthaltenden $C_1$-$C_{18}$-Monoalkoholrest steht, mit der Maßgabe, daß mindestens einer der Reste R für einen Oxetanylgruppen enthaltenden $C_1$-$C_{18}$-Monoalkoholrest steht,

Ar einem Rest der Formel

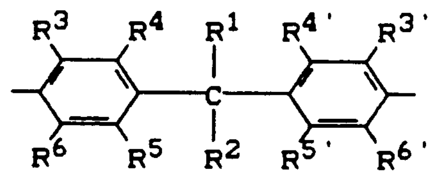

,

entspricht, worin

$R^1$ und $R^2$ gleich oder verschieden sind und Wasserstoff, $C_1$-$C_{18}$-Alkyl oder ein- oder mehrkerniges $C_6$-$C_{18}$-Aryl bedeuten und

$R^3$, $R^{3'}$, $R^4$, $R^{4'}$, $R^5$, $R^{5'}$, $R^6$ und $R^{6'}$ gleich oder verschieden sind und Wasserstoff, $C_1$-$C_{18}$-Alkyl, $C_3$-$C_6$-Cycloalkyl, ein- oder mehrkerniges $C_6$-$C_{18}$-Aryl, $C_1$-$C_{18}$-Alkoxy, $C_1$-$C_{18}$-Aryloxy oder Halogen bedeuten,

und worin

n eine ganze Zahl von 0 bis 10 ist,

E. 0,01 bis 0,5 Gew.-Teilen eines Phosphorigsäureesters der Formel

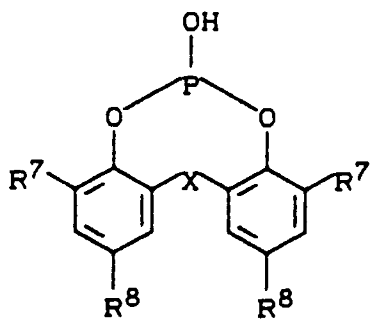

,

worin

$R^7$ und $R^8$ gleich oder verschieden sind und für $C_1$-$C_9$-Alkyl $C_5C_6$-Cycloalkyl, $C_7$-$C_9$-Aralkyl oder $C_6$-$C_{10}$-Aryl stehen und

X für -S- oder $R^9$-CH mit $R^9$ für Wasserstoff, $C_1$-$C_6$-Alkyl oder $C_5C_6$-Cyclohexyl steht, und

F. gegebenenfalls 0,1 bis 1 Gew.-Teilen Nukleierungsmitteln, Pigmenten und/oder Entformungsmitteln.

**2.** Thermoplastische Formmassen nach Anspruch 1, dadurch gekennzeichnet, daß sie 20 bis 80 Gew.-Teile Polyalkylenterephthalat enthalten.

**3.** Thermoplastische Formmassen nach Anspruch 1, dadurch gekennzeichnet, daß sie 10 bis 60 Gew.-Teile aromatisches Polycarbonat enthalten.

**4.** Thermoplastische Formmassen nach Anspruch 1, dadurch gekennzeichnet, daß sie 1 bis 28 Gew.-Teile kautschukelastisches Polymerisat enthalten.

**5.** Thermoplastische Formmassen nach Anspruch 1, dadurch gekennzeichnet, daß sie als Komponente D) Phosphorigsäure-(1-methylethylen)-di-4,1-phenylentetrakis-(3-ethyl-(3-oxethanyl)-methyl)-ester enthalten.

**6.** Thermoplastische Formmassen nach Anspruch 1, dadurch gekennzeichnet, daß sie als Komponente E) 4,8-Dicyclohexyl-6-hydroxy-2,10-dimethyl-12H-dibenzo(i,g)(1,3,2)-dioxaphosphocin enthalten.

**7.** Verwendung der thermoplastischen Formmassen nach Anspruch 1 zur Herstellung von Formkörpern.

## Claims

**1.** Thermoplastic moulding compounds based on

A. 10 to 99 parts by weight of polyalkylene terephthalate,

B. 5 to 80 parts by weight of aromatic polycarbonate,

C. optionally 1 to 30 parts by weight of rubber-elastic polymer and

D. 0.01 to 0.5 part by weight of a phosphite compound corresponding to the following formula

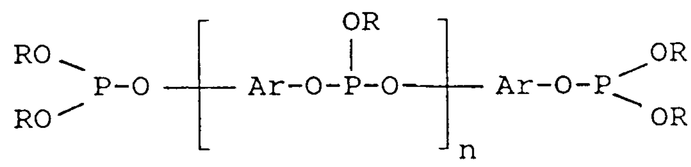

in which

R represents $C_1$-$C_{18}$ alkyl, $C_6$-$C_{15}$ aryl, $C_5$-$C_6$ cycloalkyl, $C_7$-$C_9$ aralkyl or a $C_1$-$C_{18}$ monoalcohol containing at least one oxetanyl group, with the proviso that at least one of the substituents R represents a $C_1$-$C_{18}$ monoalcohol containing oxetanyl groups,

Ar is a group corresponding to the formula

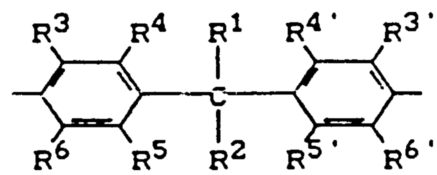

in which

$R^1$ and $R^2$ may be the same or different and represent hydrogen, $C_1$-$C_{18}$ alkyl or mono- or polynuclear $C_6$-$C_{18}$ aryl and

$R^3$, $R^{3'}$, $R^4$, $R^{4'}$, $R^5$, $R^{5'}$, $R^6$ and $R^{6'}$ may be the same or different and represent hydrogen, $C_1$-$C_{18}$ alkyl, $C_3$-$C_6$ cycloalkyl, mono- or polynuclear $C_6$-$C_{18}$ aryl, $C_1$-$C_{18}$ alkoxy, $C_1$-$C_{18}$ aryloxy or halogen,

and in which

n is an integer of from 0 to 10,

E. 0.01 to 0.5 part by weight of a phosphorous acid ester corresponding to the following formula

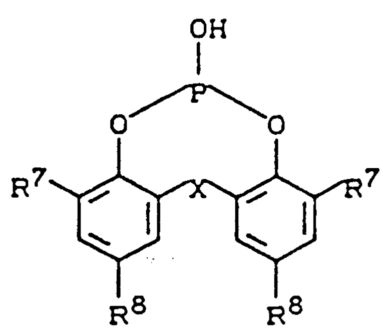

in which

$R^7$ and $R^8$ may be the same or different and represent $C_1$-$C_9$ alkyl, $C_5$-$C_6$ cycloalkyl, $C_7$-$C_9$ aralkyl or $C_6$-$C_{10}$ aryl and

X represents -S- or $R^9$-CH with $R^9$ standing for hydrogen, $C_1$-$C_6$ alkyl or $C_5$-$C_6$ cyclohexyl,

and

F. optionally 0.1 to 1 part by weight of nucleating agents, pigments and/or mould release agents.

2. Thermoplastic moulding compounds as claimed in claim 1, characterized in that they contain 20 to 80 parts by weight of polyalkylene terephthalate.

3. Thermoplastic moulding compounds as claimed in claim 1, characterized in that they contain 10 to 60 parts by weight of aromatic polycarbonate.

4. Thermoplastic moulding compounds as claimed in claim 1, characterized in that they contain 1 to 28 parts by weight of rubber-elastic polymer.

5. Thermoplastic moulding compounds as claimed in claim 1, characterized in that they contain as component D) phosphorous acid-(1-methyl ethylene)-di-4,1-phenylene tetrakis-(3-ethyl-(3-oxethanyl)-methyl)-ester.

6. Thermoplastic moulding compounds as claimed in claim 1, characterized in that they contain as component E) 4,8-dicyclohexyl-6-oxy-2,10-dimethyl-12H-dibenzo(i,g)(1,3,2)-dioxaphosphocine.

7. The use of the thermoplastic moulding compounds claimed in claim 1 for the production of mouldings.

**Revendications**

1. Matières à mouler thermoplastiques à base de
   A. 10 à 99 parties en poids d'un téréphtalate de polyalkylène,
   B. 5 à 80 parties en poids d'un polycarbonate aromatique,
   C. le cas échéant, 1 à 30 parties en poids d'un polymère élastique du type caoutchouc et
   D. 0,01 à 0,5 partie en poids d'un dérivé de phosphite de formule :

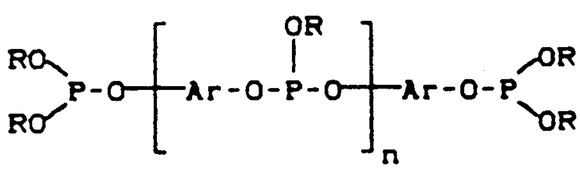

dans laquelle
R représente un groupe alkyle en $C_1$-$C_{18}$, aryle en $C_6$-$C_{15}$, cycloalkyle en $C_5$-$C_6$, aralkyle en $C_7$-$C_9$ ou un radical de monoalcool en $C_1$-$C_{18}$ contenant au moins un groupe oxétannyle, sous réserve qu'au moins un des symboles R représente un radical de monoalcool en $C_1$-$C_{18}$ contenant des groupes oxétannyles,
Ar représente un groupe de formule :

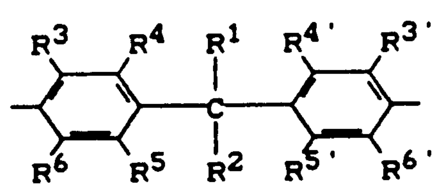

dans laquelle
$R^1$, $R^2$ ayant des significations identiques ou différentes, représentent chacun l'hydrogène, un groupe alkyle en $C_1$-$C_{18}$ ou un groupe aryle mono- ou polycyclique en $C_6$-$C_{18}$ et
$R^3$, $R^{3'}$, $R^4$, $R^{4'}$, $R^5$, $R^{5'}$, $R^6$ et $R^{6'}$ ayant des significations identiques ou différentes, représentent chacun l'hydrogène, un groupe alkyle en $C_1$-$C_{18}$, cycloalkyle en $C_3$-$C_6$, aryle mono- ou polycyclique en $C_6$-$C_{18}$, un groupe alcoxy en $C_1$-$C_{18}$, aryloxy en $C_1$-$C_{18}$ ou un halogène, et
n est un nombre entier allant de 0 à 10,

E. 0,01 à 0,5 partie en poids d'un ester phosphoreux de formule :

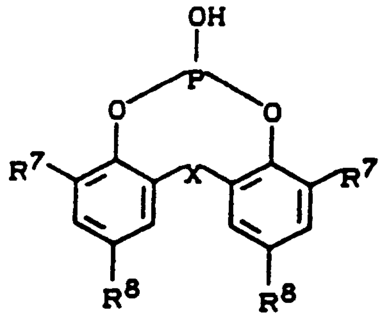

dans laquelle

$R^7$ et $R^8$, ayant des significations identiques ou différentes, représentent chacun un groupe alkyle en $C_1$-$C_9$, cycloalkyle en $C_5$-$C_6$, aralkyle en $C_7$-$C_9$ ou aryle en $C_6$-$C_{10}$ et

X représente -S- ou $R^9$-CH dans lequel $R^9$ représente l'hydrogène, un groupe alkyle en $C_1$-$C_6$ ou cyclohexyle en $C_5$-$C_6$, et

F. le cas échéant 0,1 à 1 partie en poids d'agents de nucléation, de pigments et/ou d'agents de démoulage.

**2.** Matières à mouler thermoplastiques selon la revendication 1, caractérisées en ce qu'elles contiennent de 20 à 80 parties en poids de téréphtalate de polyalkylène.

**3.** Matières à mouler thermoplastiques selon la revendication 1, caractérisées en ce qu'elles contiennent de 10 à 60 parties en poids de polycarbonate aromatique.

**4.** Matières à mouler thermoplastiques selon la revendication 1, caractérisées en ce qu'elles contiennent de 1 à 28 parties en poids d'un polymère élastique du type caoutchouc.

**5.** Matières à mouler thermoplastiques selon la revendication 1, caractérisées en ce qu'elles contiennent en tant que composant D le phosphite de (1-méthyléthylène)-di-4,1-phénylène-tétrakis-(3-éthyl-(3-oxétannyl)-méthyle).

**6.** Matières à mouler thermoplastiques selon la revendication 1, caractérisées en ce qu'elles contiennent en tant que composant E la 4,8-dicyclohexyl-6-hydroxy-2,10-diméthyl-12H-dibenzo(i,g)(1,3,2)-dioxaphosphocine.

**7.** Utilisation des matières à mouler thermoplastiques selon la revendication 1 pour la fabrication d'objets moulés.